# EUROPEAN PATENT APPLICATION

(11) **EP 4 607 818 A1**
(43) Date of publication of application: **27.08.2025**
(21) Application number: 23893801.3
(22) Date of filing: 21.11.2023
(51) Int. Cl.: H04B 7/22

(54) **BACKSCATTER COMMUNICATION METHOD, APPARATUS AND DEVICE, AND STORAGE MEDIUM**

(30) Priority: 24.11.2022 CN 202211485896
(71) Applicant: ZTE Corporation, Shenzhen, Guangdong 518057 (CN)
(72) Inventor: YUAN, Zhifeng, Shenzhen, Guangdong 518057 (CN); LI, Weimin, Shenzhen, Guangdong 518057 (CN); MA, Yihua, Shenzhen, Guangdong 518057 (CN); LI, Zhigang, Shenzhen, Guangdong 518057 (CN)
(74) Representative: Aipex B.V.
(86) International application number: PCT/CN2023/132790
(87) International publication number: WO 2024/109711

(57) **Abstract**

Provided are backscatter communication method, apparatus and device, and a storage medium. The backscatter communication method applied to a first communication node includes: (S110) determining a target position situation used to carry first information, and (S120) performing backscatter communication according to the target position situation.

## Description

### TECHNICAL FIELD

The present application relates to the technical field of communications, for example, a backscatter communication method, apparatus and device, and a storage medium.

### BACKGROUND

In backscatter communication, passive Internet of Things (passive IoT), ambient Internet of Things (ambient IoT), on-off Keying (OOK) modulation, or amplitude shift keying (ASK) modulation may be adopted. The performance of such a modulation manner is relatively inferior compared to the performance of binary phase shift keying (BPSK) modulation. In the case of BPSK modulation, how energy is collected before communication increases the complexity of a device and results in relatively low communication efficiency.

### SUMMARY

Embodiments of the present application provide a backscatter communication method, apparatus and device, and a storage medium to implement energy collection and improve the communication performance and communication efficiency of backscatter communication on the basis of guaranteeing not increasing the complexity and implementation difficulty of the device additionally.

Embodiments of the present application provide a backscatter communication method. The method is applied to a first communication node and includes the operations below.

A target position situation is determined, where the target position situation is used to carry first information; and backscatter communication is performed according to the target position situation.

Embodiments of the present application provide a backscatter communication method. The method is applied to a second communication node and includes the operations below.

A backscatter signal is detected to determine a target position situation and first information is acquired according to the target position situation.

Embodiments of the present application provide a backscatter communication apparatus. The apparatus is applied to a first communication node and includes a determination module and a communication module.

The determination module is configured to determine a target position situation used to carry first information. The communication module is configured to perform backscatter communication according to the target position situation.

Embodiments of the present application provide a backscatter communication apparatus. The apparatus is applied to a second communication node and includes a first detection module and a first acquisition module.

The first detection module is configured to detect a backscatter signal to determine a target position situation. The first acquisition module is configured to acquire first information according to the target position situation.

Embodiments of the present application provide a backscatter communication device. The backscatter communication device includes a memory and at least one processor. The memory is configured to store at least one program. The at least one program, when executed by the at least one processor, causes the at least one processor to perform the backscatter communication method according to any preceding embodiment.

Embodiments of the present application provide a storage medium for storing a computer program which, when executed by a processor, causes the processor to perform the backscatter communication method of any preceding embodiment.

### BRIEF DESCRIPTION OF DRAWINGS

FIG. 1 is a flowchart of a backscatter communication method according to an embodiment of the present application.
FIG. 2 is another flowchart of a backscatter communication method according to an embodiment of the present application.
FIG. 3A is a configuration diagram of a target position situation according to an embodiment of the present application.
FIG. 3B is a diagram of a backscatter signal according to an embodiment of the present application.
FIG. 3C is another diagram of a backscatter signal according to an embodiment of the present application.
FIG. 4A is another configuration diagram of a target position situation according to an embodiment of the present application.
FIG. 4B is another diagram of a backscatter signal according to an embodiment of the present application.
FIG. 4C is another diagram of a backscatter signal according to an embodiment of the present application.
FIG. 5 is another configuration diagram of a target position situation according to an embodiment of the present application.
FIG. 6 is a block diagram of a backscatter communication apparatus according to an embodiment of the present application.
FIG. 7 is another block diagram of a backscatter communication apparatus according to an embodiment of the present application.
FIG. 8 is a structural diagram of a communication device according to an embodiment of the present application.

### DETAILED DESCRIPTION

Embodiments of the present application are described hereinafter in conjunction with drawings. The present application is described hereinafter in conjunction with embodiments and drawings. The examples illustrated are intended to explain the present application.

There are various implementations of embodiments of the present application, including but not limited to the implementations and examples provided below.

The terms "first", "second" and the like in embodiments of the present application are used to distinguish between similar objects and are not necessarily used to describe a particular sequence or order.

In backscatter communication, a sender does not need to transmit information by actively generated electromagnetic waves, but rather by controllably reflecting electromagnetic waves generated by other devices. That is, the sender may have different reflections on electromagnetic waves generated by other devices, and different reflections represent different information.

The basic principle of the backscatter communication is that when encountering two mediums with different impedances during transmission, electromagnetic waves will be absorbed or reflected back to some extent. Different reflections of electromagnetic waves can be implemented only by switching the impedance at the antenna, for example, switching the impedance according to the to-be-transmitted information, thereby implementing the transmission of the information.

In the backscatter communication, a tag, such as a node or a device, does not actively generate electromagnetic waves and may operate without an external power source, in other words, the tag is a passive tag. In this case, to acquire energy from incident electromagnetic waves, the tag may include a circuit that can absorb or collect the energy of electromagnetic waves. The manner of energy acquisition has an important effect on the implementation complexity of the passive tag and the performance of backscattering.

The technology of the backscatter communication can reduce the power consumption of a device by multiple orders of magnitude. Therefore, the technology of the backscatter communication has great advantages in various applications of the Internet of Things. Based on the passive tag, such as a node or a device, passive Internet of Things, passive communication, zero-power-consumption communication, or ambient Internet of Things may be implemented. Ambient Internet of Things may implement communication by absorbing or reflecting electromagnetic waves in the surrounding environment.

In backscatter communication, when the tag performs a reflection, OOK modulation or ASK modulation is mostly used. Each symbol may be in any one of two states of total absorption and total reflection so that one bit may be transmitted. The OOK is the abbreviation for on-off keying, and the ASK is the abbreviation for amplitude shift keying. Moreover, the OOK may also be referred to as binary amplitude shift keying. The tag based on the OOK modulation or the ASK modulation needs only two types of impedances. In this case, only one radio frequency switch is needed to implement impedance switching. A receiver performs only simple energy detection on an OOK-modulated or ASK-modulated signal. Therefore, in the backscatter communication with the adoption of the OOK modulation or the ASK modulation, the implementation of a sender and the implementation of a receiver are both relatively simple. However, in the case of OOK or ASK based on amplitude modulation, the communication performance is sub-optimal and is worse than the performance of BPSK based on phase modulation.

In the case where the tag adopts the BPSK modulation, a total reflection is performed on each symbol. Reflection coefficients 1 and - 1 are achieved by two impedances, thereby implementing BPSK modulation. However, since each symbol is totally reflected during communication and cannot absorb or collect electromagnetic wave energy, the tag needs to store enough energy before communication. This requires the passive tag to have a large capacitor to absorb enough energy through the impedance matching mode within a long enough period before communication to complete energy collection. Therefore, in the case of the BPSK modulation, the tag needs three impedances and at least two radio frequency switches, increasing the complexity, also requiring a large capacitor, and making the implementation relatively difficult. The receiver needs to perform a BPSK detection, which also increases complexity. Additionally, because energy collection needs to be performed for a long enough time before communication is performed, communication delay might occur, affecting communication efficiency.

In this regard, embodiments of the present application provide a backscatter communication method. The first information may be carried according to a target position situation, and the backscatter communication is performed according to the target position situation to achieve the transmission of information other than the first information. This method can implement energy collection and improve the communication performance and communication efficiency of backscatter communication on the basis of guaranteeing not increasing the complexity and implementation difficulty of a device additionally.

The backscatter communication method provided in embodiments of the present application may be applied to an applicable communication node such as a tag, a sensor, a terminal, a user equipment (UE), or a backscatter communication node.

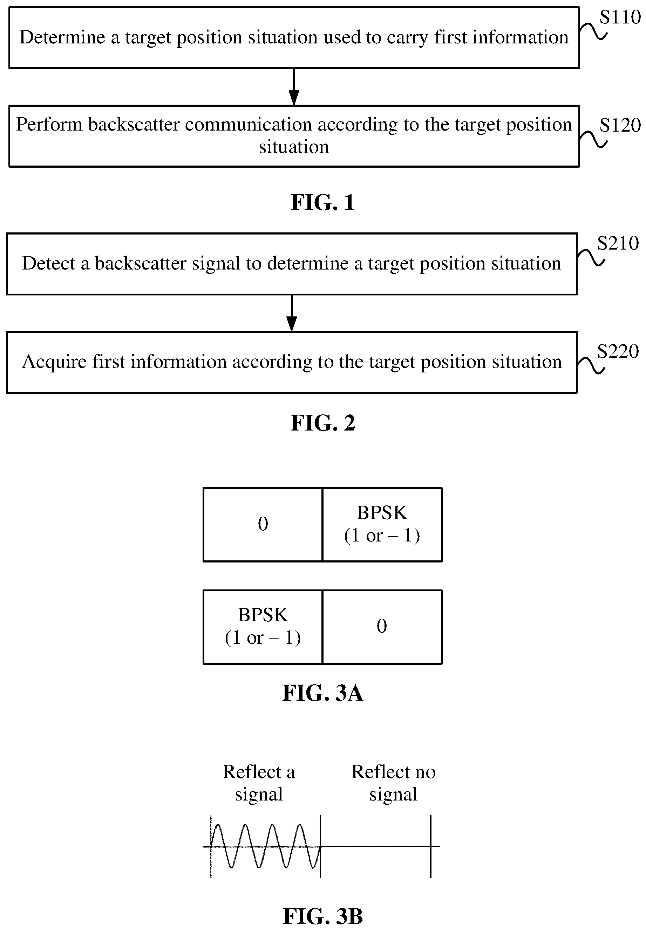

In an embodiment, FIG. 1 is a flowchart of a backscatter communication method according to an embodiment of the present application. This embodiment may be applied at least to the case where the backscatter communication is performed using a modulation such as the BPSK modulation or a quadrature phase shift keying (QPSK) modulation. This embodiment may be implemented by a first communication node. In the embodiment, the first communication node may be a device that can implement backscatter communication. Exemplarily, the first communication node may include an applicable communication node such as a passive tag, a radio frequency identification (RFID) device, a sensor, a terminal, a UE, or a backscatter communication node. In the embodiment, backscatter communication may be an active reflection or a passive reflection. In the embodiment, the first communication node may be considered as a sending end. As shown in FIG. 1, this embodiment includes S110 and S120.

In S110, a target position situation is determined, where the target position situation is used to carry first information.

The target position situation may include at least one of the position situation of a first-type position or the position situation of a second-type position. The first-type position may be used for energy collection in the backscatter communication. The second-type position may be used for transmitting information by reflecting a signal in the backscatter communication.

The first information is the information transmitted by being carried through the target position situation. In the embodiment, the first information may derive from to-be-transmitted data or may be a piece of preset information, which is not limited here.

In S120, backscatter communication is performed according to the target position situation.

In the embodiment, the first communication node may carry the first information through the target position situation. Energy collection for the backscatter communication may be performed at the first-type position, and other information may be transmitted by reflecting a signal at the second-type position, thereby implementing energy collection and improving the communication performance and communication efficiency of the backscatter communication on the basis of guaranteeing not increasing the complexity and implementation difficulty of a device additionally.

In an embodiment, the first communication node is a communication node that implements the backscatter communication by changing impedance.

In an embodiment, the target position situation includes at least one of the position situation of the first-type position or the position situation of the second-type position. The first-type position includes at least one of the following: a position for reflecting no signal, a position where the strength of a reflected signal does not exceed a specified threshold, a position for reflecting a signal according to first data, a position where a first impedance state is used, a position for determining an impedance state according to the first data, a position where a first circuit state is used, a position for determining a circuit state according to the first data, a position for energy collection, a position for transmitting the first data, or a position for transmitting no data. The second-type position includes at least one of the following: a position for reflecting a signal, a position where the strength of a reflected signal exceeds the specified threshold, a position for reflecting a signal according to second data, a position where a second impedance state is used, a position for determining an impedance state according to the second data, a position where a second circuit state is used, a position for determining a circuit state according to the second data, a position for energy consumption, a position for transmitting the second data, or a position for transmitting data.

In an embodiment, the first-type position may include any position other than the second-type position. In an embodiment, the second-type position may include any position other than the first-type position.

In an embodiment, the target position situation may be the index of a target position, the index of the target position situation, or the pattern of the target position situation. In an embodiment, in the case where the target position situation includes the position situation of the first-type position, the target position situation may include an index of a position of the first-type position or a pattern of a position of the first-type position. In an embodiment, in the case where the target position situation includes the position situation of the second-type position, the target position situation may include an index of a position of the second-type position or a pattern of a position of the second-type position. In an embodiment, in the case where the target position situation includes the position situation of the first-type position and the position situation of the second-type position, the target position situation may include the index of the position of the first-type position and the index of the position of the second-type position, or the pattern of the position of the first-type position and the pattern of the position of the second-type position.

In an embodiment, the target position situation may include the usage situation of T transmission positions (or transmission moments), the usage situation of Z positions among the T transmission positions, or the usage situation of R positions among the T transmission positions. T is an integer greater than 1. Z is an integer greater than or equal to 1. R is an integer greater than or equal to 1. The sum of Z and R is less than or equal to T.

In an embodiment, the target position situation derives from N position situations. N is greater than or equal to 2^{M}. M is an integer greater than or equal to 1. In an embodiment, the target position situation includes one or more of the N position situations.

In an embodiment, the first information may derive from to-be-transmitted data or may be a type of preset information.

In an embodiment, the first information includes one of the following: M bits or a symbol obtained according to the M bits. 2^{M} position situations in the N position situations carry different value situations of the M bits respectively.

In an embodiment, the first information includes first preset information. A position situation other than the 2^{M} position situations in the N position situations is used to indicate the first preset information. Alternatively, a specified position situation in the N position situations is used to indicate the first preset information.

In an embodiment, in the case where the first information includes the M bits, different value situations of the M bits are carried through different position situations respectively, or different position situations are used to carry different value situations of the M bits respectively. In the case where the first information includes the symbol obtained according to the M bits, different symbols may be obtained according to different value situations of the M bits. In this case, different symbols are carried through different position situations, or different position situations are used to carry different symbols. In an embodiment, the M bits derive from the to-be-transmitted data or are used to indicate specified information.

In an embodiment, the first data includes a symbol 0. The first data may also be other data, which is not limited here.

In an embodiment, the second data includes one of the following: data other than the first information in the to-be-transmitted data, the to-be-transmitted data, or second preset information. In an embodiment, the second data may be in the form of data bits or in the form of modulation symbols. In an embodiment, the first information derives from the to-be-transmitted data, and the second data may be data other than the first information in the to-be-transmitted data. In an embodiment, the first information does not derive from the to-be-transmitted data. For example, the first information is a type of preset information. In this case, the second data may be the to-be-transmitted data. In an embodiment, the second data may also be a type of preset information, for example, the second preset information.

In an embodiment, the first-type position may be represented by "0" or the first data. In an embodiment, the second-type position may be represented by "1" or the second data.

In an embodiment, the first impedance state includes at least one of the following: an impedance matching state, an impedance state for reflecting no signal, an impedance state where the strength of a reflected signal does not exceed the specified threshold, an impedance state for reflecting a signal according to the first data, an impedance state determined according to the first data, an impedance state corresponding to the first circuit state, an impedance state for energy collection, an impedance state for transmitting the first data, or an impedance state for transmitting no data.

In an embodiment, the second impedance state includes at least one of the following: a non-impedance matching state, a state where load impedance is infinitely great, a state where load impedance is zero, an impedance state for reflecting a signal, an impedance state where the strength of a reflected signal exceeds the specified threshold, an impedance state for reflecting a signal according to the second data, an impedance state determined by the second data, an impedance state corresponding to the second circuit state, an impedance state for energy consumption, an impedance state for transmitting the second data, or an impedance state for transmitting data.

In an embodiment, the operation of determining the target position situation includes one of the following: The target position situation is determined directly according to the first information, or the target position situation is determined from the N position situations according to the first information.

In an embodiment, the target position situation may be determined according to the first information. For example, the index of the target position may be determined according to the first information to determine the target position situation. Alternatively, the index of the target position situation may be determined according to the first information to determine the target position situation from the N position situations. In an embodiment, the target position situation may be determined according to a state or requirement, and the first information is carried through the target position situation. In an embodiment, apart from carrying the first information, the target position situation may also indicate a state or requirement. In an embodiment, the first information includes one or more types of information or one or more levels of information.

In an embodiment, the operation of performing the backscatter communication according to the target position situation includes the operations below.

The first-type position is determined, where the operation of determining the first-type position includes one of the following: The first-type position is determined according to the target position situation, the first-type position is determined according to the first information, or the first-type position is determined according to the second-type position. At least one of the following operations is performed at the first-type position: No signal is reflected at the first-type position, a signal is reflected at the first-type position with the strength of the reflected signal not exceeding the specified threshold, a signal is reflected according to the first data at the first-type position, the first impedance state is used at the first-type position, an impedance state is determined according to the first data at the first-type position, the first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In the embodiment, the operation of reflecting the signal according to the first data includes the following: A used impedance state or circuit state is determined according to the first data; the first data is loaded or modulated onto the reflected signal; the reflected signal is adjusted according to the first data; or a to-be-transmitted symbol is obtained according to the first data, and then the signal is reflected according to the to-be-transmitted symbol. The operation of reflecting the signal according to the to-be-transmitted symbol includes the following: The to-be-transmitted symbol is loaded or modulated onto the reflected signal, or the reflected signal is adjusted according to the to-be-transmitted symbol.

In an embodiment, the operation of performing the backscatter communication according to the target position situation includes the operations below.

The second-type position is determined, where the operation of determining the second-type position includes one of the following: The second-type position is determined according to the target position situation, the second-type position is determined according to the first information, or the second-type position is determined according to the first-type position.

At least one of the following operations is performed at the second-type position: A signal is reflected at the second-type position, a signal is reflected at the second-type position with the strength of the reflected signal exceeding the specified threshold, a signal is reflected according to the second data at the second-type position, the second impedance state is used at the second-type position, an impedance state is determined according to the second data at the second-type position, the second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In the embodiment, the operation of reflecting the signal according to the second data includes the following: A used impedance state or circuit state is determined according to the second data; the second data is loaded or modulated onto the reflected signal; or the reflected signal is adjusted according to the second data. An appropriate loading manner, modulation manner, or adjustment manner may be used here, for example, frequency shift keying (FSK) modulation or PSK modulation, and is not limited here.

Alternatively, the operation of reflecting the signal according to the second data includes the following: A to-be-transmitted symbol is obtained according to the second data, and then the signal is reflected according to the to-be-transmitted symbol. When the to-be-transmitted symbol is obtained according to the second data, BPSK modulation or QPSK modulation may be used. Other modulation manners may also be used, for example, other PSK modulation, amplitude phase modulation, or differential modulation, and are not limited here. The operation of reflecting the signal according to the to-be-transmitted symbol includes the following: The to-be-transmitted symbol is loaded or modulated onto the reflected signal, or the reflected signal is adjusted according to the to-be-transmitted symbol.

The operation of reflecting a signal according to embodiments of the present application may also be an operation of reflecting a signal according to the transmitted data and may be implemented according to a similar process.

In an embodiment, the operation of performing the backscatter communication according to the target position situation includes the operation below.

The backscatter communication is performed on second information according to the target position situation. The second information includes one of the following: data other than the first information in the to-be-transmitted data, the to-be-transmitted data, or the second preset information.

In the embodiment, when the backscatter communication is performed according to the target position situation, the first information may be carried through the target position situation, and a signal may be reflected to transmit the second information. The information transmitted according to the backscatter communication method provided in this embodiment includes the first information and the second information. In an embodiment, the second information may be equivalent to the preceding second data. Accordingly, performing the backscatter communication on the second information may also be equivalent to reflecting a signal according to the second data.

In an embodiment, the to-be-transmitted data includes at least one of the following: identity information, state information, perception information, indication information, a data message, or payload. In the embodiment, identity information includes the identity information of a node or a device, such as a tag or a sensor, and is used for identity identification. State information includes the state of a node or a device. Perception information includes the information perceived by a node or a device like a sensor. Indication information includes the information for indicating a specified situation or a preset situation. A data message includes a to-be-transmitted data message in a node or a device. The payload includes the to-be-transmitted data load in a node or a device.

In an embodiment, FIG. 2 is another flowchart of a backscatter communication method according to an embodiment of the present application. This embodiment may be applied at least to the case where the backscatter communication is performed using a modulation manner such as BPSK or QPSK. This embodiment may be implemented by a second communication node. In the embodiment, the second communication node may be a device that can implement the backscatter communication. Exemplarily, the second communication node may include an applicable communication node such as a reader-writer, a card reader, a receiver, a receiving node, a receiving device, a base station, a network device, a backscatter communication terminal, or a backscatter communication device. In the embodiment, the second communication node may be considered as a receiving end. As shown in FIG. 2, this embodiment includes S210 and S220.

In S210, a backscatter signal is detected to determine a target position situation.

In S220, first information is acquired according to the target position situation.

In the embodiment, the second communication node detects the backscatter signal sent by the first communication node to determine the target position situation and acquires the first information according to the target position situation. In the embodiment, the target position situation includes at least one of a position situation of a first-type position or a position situation of a second-type position. The first-type position may be used for energy collection by the first communication node. The second-type position may be used for the first communication node transmitting other information by reflecting a signal. This method can implement energy collection and improve the communication performance and efficiency of the backscatter communication while does not significantly increase the complexity and implementation difficulty of the device.

In an embodiment, the operation of detecting the backscatter signal to determine a target position situation includes the operations below.

The backscatter signal is detected to determine at least one of a first-type position or a second-type position; and the target position situation is determined according to the at least one of the first-type position or the second-type position.

In an embodiment, the backscatter signal may include at least one of the following: a reflected signal, a reflected signal whose signal strength does not exceed a specified threshold, or a reflected signal whose signal strength exceeds the specified threshold.

In an embodiment, the backscatter communication method applied to the second communication node further includes detecting the backscatter signal to acquire second information.

In an embodiment, the backscatter communication method applied to the second communication node further includes acquiring, according to the at least one of first information or the second information, at least one of the following: identity information, state information, perception information, indication information, a data message, or payload.

The backscatter communication method applied to the second communication node is a receiving method corresponding to the backscatter communication method applied to the first communication node and thus may be implemented correspondingly. For the description of terms including target position situation, first information, first-type position, second-type position, second information, identity information, state information, perception information, indication information, data message, and payload in the preceding embodiment, reference may be made to the description of corresponding terms in the embodiment of the backscatter communication method applied to the first communication node and is not repeated here.

In an embodiment, FIG. 3A is a configuration diagram of a target position situation according to an embodiment of the present application. In this embodiment, an example of two transmission positions is taken for describing the process of performing the backscatter communication according to the target position situation. As shown in FIG. 3A, in this embodiment, no signal is reflected at one of the two transmission positions. The position for reflecting no signal is used for energy absorption or energy collection, and the other position is used to reflect a signal. In the embodiment, the position for reflecting no signal may be marked as "0". Then there are two situations for the position for reflecting no signal. That is, there are two situations for the position for reflecting a signal. That is, there are two situations for the position for reflecting no signal and the position for reflecting a signal. That is, the number of position situations is that N = 2.

Because there are two situations for at least one of a position for reflecting no signal or a position for reflecting a signal, the two position situations may be used to carry one-bit information. For example, when no signal is reflected at the first-type position, it indicates that bit "0" is carried; when no signal is reflected at the second-type position, it indicates that bit "1" is carried. Alternatively, when a signal is reflected at the second-type position, it indicates that bit "0" is carried; when a signal is reflected at the first-type position, it indicates that bit "1" is carried. Alternatively, when no signal is reflected at the first-type position and a signal is reflected at the second-type position, it indicates that bit "0" is carried; when a signal is reflected at the first-type position and no signal is reflected at the second-type position, it indicates that bit "1" is carried. The one-bit information may also be carried through indexes of the two position situations. For example, the indexes of the two position situations are 0 and 1 and are used to carry bit "0" and bit "1", respectively. The position situations here may also be position patterns. For example, the position for reflecting no signal is marked as "0", and the position to reflect a signal is marked as "1" or non-"0". In this case, there are 2 position patterns which may be used to carry bit "0" and bit "1", respectively.

When a signal is reflected at another position, BPSK modulation may be used to transmit one bit. The symbol after BPSK modulation may be 1 or - 1. A signal is reflected according to the symbol. For example, reflection coefficients 1 and - 1 are achieved by two impedances to modulate the symbol onto the reflected signal. The symbol after BPSK modulation may also be in other cases, which is not limited here.

In this embodiment, the information is carried by at least one of a position situation for reflecting no signal or a position situation for reflecting a signal. It may be considered as that the information is mapped or modulated to at least one of the position situation for reflecting no signal or the position situation for reflecting the signal. It may also be considered as that the at least one of the position situation for reflecting no signal or the position situation for reflecting the signal is determined according to the information. For example, it is assumed that the information is one bit "1". In this case, it is determined that the target position situation to be used is a position situation in which a signal is reflected at the first-type position and no signal is reflected at the second-type position. Then the backscatter communication is performed according to this position situation. BPSK modulation may be performed on another one to-be-transmitted bit to obtain a modulated symbol. A signal is reflected at the first-type position according to the modulated symbol, and no signal is reflected at the second-type position. It can be seen that the information, that is, one bit "1", is carried through the target position situation in this example; moreover, the backscatter communication is performed according to the target position situation. The transmission of the information of another one bit is implemented at the position for reflecting a signal.

In this embodiment, two bits are transmitted at two positions, having the same spectral efficiency as OOK modulation. However, the communication performance with the adoption of BPSK modulation is better. In this embodiment, QPSK modulation may also be used at the position for reflecting a signal. In this case, three bits may be transmitted, thereby improving spectral efficiency.

In this embodiment, the position for reflecting no signal may also be considered as a position where the strength of a reflected signal does not exceed the specified threshold, a position for transmitting no data, a position for transmitting "0", a position for using "0" to control a to-be-reflected signal, a position in the energy collection state, or a position in the impedance matching state (for example, a state where load impedance is equal to the conjugation of antenna impedance). The position for reflecting a signal may also be considered as a position where the strength of a reflected signal exceeds the specified threshold, a position for transmitting data directly, a position for using transmitted data to control a to-be-reflected signal, a position in the energy consumption state, or a position in a specific impedance state (for example, a state where load impedance is infinitely great or 0) The impedance matching state or the specific impedance state may be implemented by changing impedance or by a corresponding circuit state or circuit form.

FIG. 3B is a diagram of a backscatter signal according to an embodiment of the present application. It is also assumed here that the information carried through at least one of a position for reflecting no signal or a position for reflecting a signal is one bit "1". In this case, the to-be-used target position situation is determined as a position situation in which a signal is reflected at the first-type position and no signal is reflected at the second-type position. Then the backscatter communication is performed according to this position situation. For example, another one to-be-transmitted bit is assumed to be bit "0". BPSK modulation is performed to obtain a modulated symbol "1". A signal is reflected at the first-type position according to the modulated symbol, and no signal is reflected at the second-type position. It is assumed here that symbol "1" may be obtained after BPSK modulation is performed on bit "0" and that symbol "- 1" may be obtained after BPSK modulation is performed on bit "1". A diagram of a backscatter signal is shown in FIG. 3B, in which a signal is reflected at the first-type position according to the modulated symbol "1", and no signal is reflected at the second-type position.

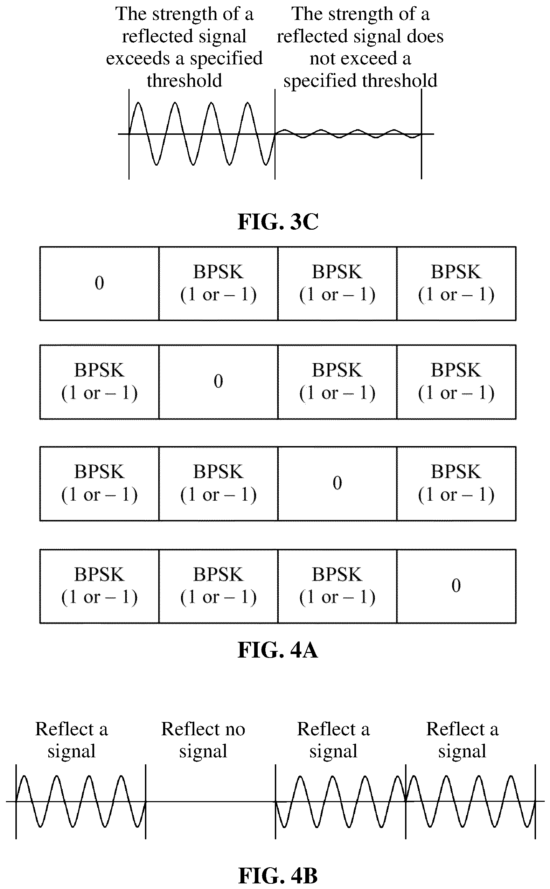

FIG. 3C is another diagram of a backscatter signal according to an embodiment of the present application. In an actual system, for some reasons like unsatisfactory impedance matching, it may not be possible to achieve the reflection of no signal completely. That is, there may still exist a very weak reflected signal at the position for reflecting no signal. There exists a strong reflected signal at the position for truly reflecting a signal. A diagram of a backscatter signal is shown in FIG. 3C, in which a signal is reflected at the first-type position according to the modulated symbol "1" with the strength exceeding the specified threshold, and the strength of a signal reflected at the second-type position does not exceed the specified threshold.

In an embodiment, FIG. 4A is another configuration diagram of a target position situation according to an embodiment of the present application. In this embodiment, an example of four transmission positions is taken for describing the process of performing the backscatter communication according to the target position situation. As shown in FIG. 4A, in this embodiment, no signal is reflected at one of the four transmission positions. The position for reflecting no signal is used for energy absorption or energy collection, and each of the other three positions may reflect a signal. Then there are four situations for the position for reflecting no signal. That is, there are four situations for each position for reflecting a signal. That is, there are four situations for the position for reflecting no signal and each position for reflecting a signal. That is, the number of position situations is that N = 4.

Because there are four situations for at least one of a position for reflecting no signal or a position for reflecting a signal, the four position situations may be used to carry two-bit information. For example, bit "00" is carried when at least one of the following is satisfied: no signal is reflected at the first position (the first-type position includes the first position) or a signal is reflected each of the other three positions (the second-type position includes the second position, the third position, and the fourth position); bit "01" is carried when at least one of the following is satisfied: no signal is reflected at the second position (the first-type position includes the second position) or a signal is reflected at each of the other three positions (the second-type position includes the first position, the third position, and the fourth position); bit "10" is carried when at least one of the following is satisfied: no signal is reflected at the third position (the first-type position includes the third position) or a signal is reflected at each of the other three positions (the second-type position includes the first position, the second position, and the fourth position); and bit "11 " is carried when at least one of the following is satisfied: no signal is reflected at the fourth position (the first-type position includes the fourth position) or a signal is reflected at each of the other three positions (the second-type position includes the first position, the second position, and the third position). Similarly, the two-bit information may be carried through indexes of the four position situations or patterns of the four position situations here.

When a signal is reflected at each of the three positions other than the position for reflecting no signal, one bit is transmitted with the adoption of BPSK modulation correspondingly. In total, three bits may be transmitted.

In this embodiment, the information is carried by at least one of a position situation for reflecting no signal or a position situation for reflecting a signal. It may be considered as that the information is mapped or modulated to at least one of the position situation for reflecting no signal or the position situation for reflecting a signal. It may also be considered as that at least one of the position situation for reflecting no signal or the position situation for reflecting the signal is determined according to the information. For example, it is assumed that the information is two bits "01". In this case, it is determined that the target position situation to be used is a position situation in which no signal is reflected at the second position and a signal is reflected at each of the other three positions (that is, the first position, the third position, and the fourth position). Then the backscatter communication is performed according to this position situation. BPSK modulation may be performed on another three to-be-transmitted bits to obtain three modulated symbols. A signal is reflected at each of the first position, the third position, and the fourth position according to a respective one of the three modulated symbols, and no signal is reflected at the second position. It can be seen that the information, that is, two bits "01", is carried through the target position situation in this example; moreover, the backscatter communication is performed according to the target position situation. The transmission of the information of another three bits is implemented at the three positions each for reflecting a signal.

It can be seen that a total of 2 + 3 = 5 bits can be transmitted through four positions in this embodiment. In a traditional OOK modulation scheme or BPSK modulation scheme, only four bits can be transmitted. That is, compared with a traditional scheme, the spectral efficiency in this embodiment can be improved by (5 - 4)/4 = 25%.

FIG. 4B is another diagram of a backscatter signal according to an embodiment of the present application. Here it is also assumed that the information carried through at least one of the position situation for reflecting no signal or the position situation for reflecting the signal is two bits "01". In this case, the to-be-used target position situation is determined as a position situation in which no signal is reflected at the second position and signals are reflected at other positions (that is, the first position, the third position, and the fourth position). Then the backscatter communication is performed according to this position situation. For example, another three to-be-transmitted bits are assumed to be bit "010". BPSK modulation is performed to obtain three modulated symbols "1", "- 1", and "1". A signal is reflected at each of the first position, the third position, and the fourth position according to a respective one of the three modulated symbols, and no signal is reflected at the second position. A diagram of a backscatter signal is shown in FIG. 4B, in which a signal is reflected at each of the first position, the third position, and the fourth position according to each of the modulated symbols " 1 ", "- 1", and "1 ", respectively and no signal is reflected at the second position. It can be seen that reflected signals corresponding to symbols "1" and "- 1" are different.

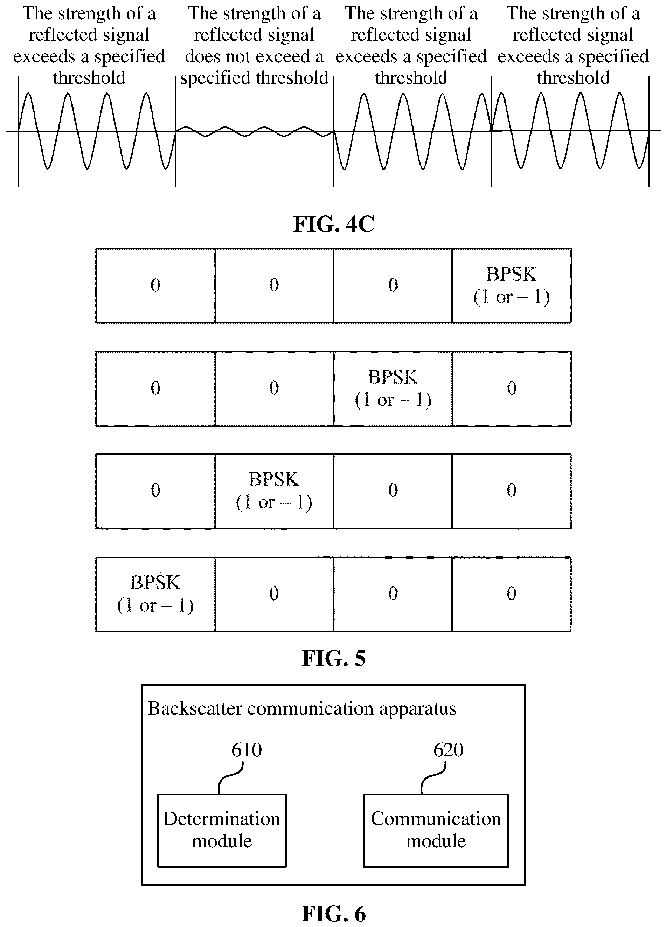

FIG. 4C is another diagram of a backscatter signal according to an embodiment of the present application. In FIG. 4C, a signal is reflected at each of the first position, the third position, and the fourth position with the strength exceeding the specified threshold according to each of the modulated symbols "1", "- 1", and "1", respectively; the strength of a signal reflected at the second position does not exceed the specified threshold.

In an embodiment, FIG. 5 is another configuration diagram of a target position situation according to an embodiment of the present application. In this embodiment, an example of four transmission positions is taken for describing the process of performing the backscatter communication according to the target position situation. As shown in FIG. 5, in this embodiment, no signal is reflected at three of the four transmission positions. A position for reflecting no signal is used for energy absorption or energy collection. The remaining position may reflect a signal. Then it can be seen that there are four situations for each position for reflecting no signal. That is, there are four situations for the position for reflecting a signal. That is, there are four situations for each position for reflecting no signal and the position for reflecting a signal. That is, the number of position situations is that N = 4.

Because there are four situations for at least one of a position for reflecting no signal or a position for reflecting a signal, the four position situations may be used to carry two-bit information. For example, bit "00" is carried when at least one of the following is satisfied: no signal is reflected at the first position, the second position, and the third position or a signal is reflected at the fourth position; bit "01" is carried when at least one of the following is satisfied: no signal is reflected at the first position, the second position, and the fourth position or a signal is reflected at the third position; bit "10" is carried when at least one of the following is satisfied: no signal is reflected at the first position, the third position, and the fourth position or a signal is reflected at the second position; and bit "11" is carried when at least one of the following is satisfied: no signal is reflected at the second position, the third position, and the fourth position or a signal is reflected at the first position. Similarly, the two-bit information may be carried through indexes of the four position situations or patterns of the four position situations here.

When a signal is reflected at the remaining position other than the three positions each for reflecting no signal, one bit may be transmitted with the adoption of BPSK modulation.

In this embodiment, a total of 2 + 1 = 3 bits are transmitted through four positions. Compared with a traditional scheme, the spectral efficiency is reduced somehow. However, since three positions are used for energy collection, more energy can be collected, which can be used for the backscatter communication in scenarios such as a relatively long distance or relatively large coverage. In this embodiment, QPSK modulation may also be used at the position for reflecting a signal. In this case, a total of four bits may be transmitted, thereby having the same spectral efficiency as a traditional scheme.

In an embodiment, seven transmission positions are taken for example. In this embodiment, no signal is reflected at three of the seven transmission positions. A position for reflecting no signal is used for energy absorption or energy collection. Each of the remaining four positions may reflect a signal. Then there are C(7, 3) = 35 situations for each position for reflecting no signal. That is, there are 35 situations for each position for reflecting a signal. That is, there are 35 situations for each position for reflecting no signal or each position for reflecting a signal. That is, the number of position situations is that N = 35. C(7, 3) denotes the number of combinations of selecting three different positions from the seven positions. Because there are 35 situations for a position for reflecting no signal or for reflecting a signal, the 35 position situations may be used to carry five-bit information. The five-bit information may be carried through 2⁵ = 32 position situations among the 35 position situations. When a signal is reflected at each of the four positions, one bit may be transmitted with the adoption of BPSK modulation correspondingly. In total, four bits may be transmitted. In this case, a total of 5 + 4 = 9 bits can be transmitted through the seven positions in this embodiment. In a traditional OOK modulation scheme or BPSK modulation scheme, only seven bits can be transmitted. That is, compared with a traditional scheme, the spectral efficiency in this embodiment can be improved by (9 - 7)/7 = 28.6%. It can be seen that three positions are used for energy collection in this embodiment, collecting more energy and improving spectral efficiency. Additionally, 32 position situations are needed to carry five-bit information. Other position situations among the 35 position situations may be used to indicate preset information or specified information or may be reserved.

In an embodiment, this embodiment provides a backscatter communication method. The backscatter communication method is applied to a first communication node and includes the operations below.

A target position situation is determined according to first information, and the backscatter communication is performed according to the target position situation.

In an example, the first information derives from to-be-transmitted data. The first information may include part of the data in the to-be-transmitted data.

In an example, the first information includes M bits or a symbol obtained according to the M bits. The M bits may derive from the to-be-transmitted data or derive from specified information or preset information. Alternatively, the M bits are used to indicate the specified information or the preset information.

In an example, the first information includes first preset information.

In an example, the target position situation includes at least one of the position situation of a first-type position or the position situation of a second-type position.

In an example, the operation of performing the backscatter communication according to the target position situation includes performing the backscatter communication on second information according to the target position situation.

In an example, the second information includes data other than the first information in the to-be-transmitted data. For example, the to-be-transmitted data includes X bits. The first information includes M bits in the to-be-transmitted data. The second information includes the other (X - M) bits in the to-be-transmitted data.

In an example, the second information includes the to-be-transmitted data.

In an example, the second information includes second preset information.

In an example, the second data may be in the form of data bits or in the form of data symbols.

In an example, the backscatter communication method further includes acquiring the to-be-transmitted data. The to-be-transmitted data may be acquired before determining the target position situation according to the first information or before performing the backscatter communication.

In an example, the first information includes part of the data in the to-be-transmitted data, and the second information includes data other than the first information in the to-be-transmitted data.

In an example, the first information includes the first preset information, and the second information includes the to-be-transmitted data.

In an example, the first information includes the first preset information, and the second information includes the second preset information.

Other technical features in this embodiment are as described in the preceding embodiments and are not repeated here.

In an embodiment, this embodiment provides a backscatter communication method. The backscatter communication method is applied to a first communication node and includes the operations below.

To-be-transmitted data is acquired, and a target position situation is determined according to M bits in the to-be-transmitted data.

In an example, the to-be-transmitted data includes at least one of the following: identity information, state information, perception information, indication information, a data message, or payload. Identity information includes the identity information of a node or a device, such as a tag or a sensor, and is used for identity identification. State information includes the state of a node or a device. Perception information includes the information perceived by a node or a device like a sensor. Indication information includes the information for indicating a specified situation or a preset situation. A data message includes a to-be-transmitted data message in a node or a device. Payload includes the to-be-transmitted data load in a node or a device.

In an example, the target position situation includes at least one of the following: a position for reflecting no signal, a position for reflecting a signal, a position where the strength of a reflected signal does not exceed a specified threshold, a position where the strength of a reflected signal exceeds a specified threshold, a position for reflecting a signal according to first data, a position for reflecting a signal according to second data, a position where a first impedance state is used, a position where a second impedance state is used, a position for determining an impedance state according to the first data, a position for determining an impedance state according to the second data, a position where a first circuit state is used, a position where a second circuit state is used, a position for determining a circuit state according to the first data, a position for determining a circuit state according to the second data, a position for energy collection, a position for energy consumption, a position for transmitting the first data, a position for transmitting the second data, a position for transmitting no data, or a position for transmitting data.

In an example, a position situation may be the index of the position situation, the pattern of a position, or the index of the position. In this case, the target position situation may include the index of the target position situation, the pattern of the target position situation, or the pattern of a target position.

In an example, the target position situation includes the position situation of a first-type position, the position situation of a second-type position, or the position situation of the first-type position and the position situation of the second-type position. The position situation of the first-type position includes an index of a position of the first-type position or a pattern of the position of the first-type position. The position situation of the second-type position includes an index of a position of the second-type position or a pattern of the position of the second-type position. The position situation of the first-type position and the position situation of the second-type position include the index of the position of the first-type position and the index of the position of the second-type position, or the pattern of the position of the first-type position and the pattern of the position of the second-type position.

In an example, the target position situation may include the usage situation of T transmission positions (or transmission moments), the usage situation of Z positions among the T transmission positions, or the usage situation of R positions among the T transmission positions. T is an integer greater than 1. Z is an integer greater than or equal to 1. R is an integer greater than or equal to 1. The sum of Z and R is less than or equal to T.

In an example, C(T, Z) is greater than or equal to 2^{M}; alternatively, C(T, R) is greater than or equal to 2^{M}. C(T, Z) denotes the number of combinations of selecting Z different positions from the T positions. C(T, R) denotes the number of combinations of selecting R different positions from the T positions.

In an example, the target position situation derives from N position situations. N is greater than or equal to 2^{M}. That is, a candidate position situation includes the N position situations.

In an example, at least 2^{M} position situations among the N position situations are available. The target position situation derives from the at least 2^{M} position situations. Other position situations may be reserved.

In an example, the 2^{M} position situations among the N position situations are used to carry different value situations of the M bits respectively.

In an example, a position situation other than the 2^{M} position situations in the N position situations is used to indicate first preset information; alternatively, a specified position situation in the N position situations is used to indicate the first preset information. In this case, the target position situation may also be determined according to the first preset information in the backscatter communication method.

In an example, the operation of determining the target position situation according to the M bits in the to-be-transmitted data includes the following: The target position situation is determined directly according to the M bits, or the target position situation is determined from the 2^{M} position situations according to the M bits.

In an example, the backscatter communication method further includes determining the first-type position. The operation of determining the first-type position includes the following: The first-type position is determined according to the target position situation, the first-type position is determined according to the second-type position, the first-type position is determined according to the M bits, or the first-type position is determined from the 2^{M} position situations according to the M bits.

In an example, the backscatter communication method further includes determining the second-type position. The operation of determining the second-type position includes the following: The second-type position is determined according to the target position situation, the second-type position is determined according to the first-type position, the second-type position is determined according to the M bits, or the second-type position is determined from the 2^{M} position situations according to the M bits.

For example, in one case, at least one of the first-type position or the second-type position may be determined according to the target position situation. In another case, at least one of the first-type position or the second-type position may be determined according to the M bits. In another case, the first-type position may be determined first, and then the second-type position is determined according to the first-type position; alternatively, the second-type position may be determined first, and then the first-type position is determined according to the second-type position.

In an example, in the method, the operation of determining the target position situation according to the M bits in the to-be-transmitted data may be replaced with determining at least one of the first-type position or the second-type position according to the M bits in the to-be-transmitted data.

In an example, the first-type position includes at least one of the following: a position for reflecting no signal, a position where the strength of a reflected signal does not exceed the specified threshold, a position for reflecting a signal according to the first data, a position where the first impedance state is used, a position for determining an impedance state according to the first data, a position where the first circuit state is used, a position for determining a circuit state according to the first data, a position for energy collection, a position for transmitting the first data, or a position for transmitting no data.

In an example, the first-type position may include any position other than the second-type position.

In an example, the second-type position includes at least one of the following: a position for reflecting a signal, a position where the strength of a reflected signal exceeds the specified threshold, a position for reflecting a signal according to the second data, a position where the second impedance state is used, a position for determining an impedance state according to the second data, a position where the second circuit state is used, a position for determining a circuit state according to the second data, a position for energy consumption, a position for transmitting the second data, or a position for transmitting data.

In an example, the second-type position may include any position other than the first-type position.

In an example, the first data may be "0". The first data may be symbol "0". The first data may also be other data, which is not limited here.

In an example, the first impedance state includes at least one of the following: an impedance matching state, an impedance state for reflecting no signal, an impedance state where the strength of a reflected signal does not exceed the specified threshold, an impedance state for reflecting a signal according to the first data, an impedance state determined according to the first data, an impedance state corresponding to the first circuit state, an impedance state for energy collection, an impedance state for transmitting the first data, or an impedance state for transmitting no data.

In an example, the second data includes bits deriving from the to-be-transmitted data and other than the M bits or symbols obtained by modulating the bits. In an example, the second data includes the to-be-transmitted data. In an example, the second data includes second preset information.

In an example, the second impedance state includes at least one of the following: a non-impedance matching state, a state where load impedance is infinitely great, a state where load impedance is zero, an impedance state for reflecting a signal, an impedance state where the strength of a reflected signal exceeds the specified threshold, an impedance state for reflecting a signal according to the second data, an impedance state determined by the second data, an impedance state corresponding to the second circuit state, an impedance state for energy consumption, an impedance state for transmitting the second data, or an impedance state for transmitting data.

In an example, the backscatter communication method includes at least one of the following: No signal is reflected at the first-type position, a signal is reflected at the first-type position with the strength of the reflected signal not exceeding the specified threshold, a signal is reflected according to the first data at the first-type position, the first impedance state is used at the first-type position, an impedance state is determined according to the first data at the first-type position, the first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In an example, the backscatter communication method includes at least one of the following: A signal is reflected at the second-type position, a signal is reflected at the second-type position with the strength of the reflected signal exceeding the specified threshold, a signal is reflected according to the second data at the second-type position, the second impedance state is used at the second-type position, an impedance state is determined according to the second data at the second-type position, the second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In an example, the operation of reflecting the signal according to the first data includes the following: A used impedance state or circuit state is determined according to the first data; the first data is loaded or modulated onto the reflected signal; the reflected signal is adjusted according to the first data; or a to-be-transmitted symbol is obtained through modulating the first data, and then the signal is reflected according to the to-be-transmitted symbol. The operation of reflecting the signal according to the to-be-transmitted symbol includes the following: The to-be-transmitted symbol is loaded or modulated onto the reflected signal, or the reflected signal is adjusted according to the to-be-transmitted symbol.

In an example, the operation of reflecting the signal according to the second data includes the following: A used impedance state or circuit state is determined according to the second data; the second data is loaded or modulated onto the reflected signal; or the reflected signal is adjusted according to the second data. An appropriate loading manner, modulation manner, or adjustment manner may be used here, for example, FSK modulation or PSK modulation, and is not limited here.

Alternatively, a to-be-transmitted symbol is obtained by performing BPSK modulation or QPSK modulation on the second data, and then the signal is reflected according to the to-be-transmitted symbol. Apart from BPSK modulation and QPSK modulation, other modulation manners may also be used, for example, other PSK modulation, amplitude phase modulation, or differential modulation, and are not limited here. The operation of reflecting the signal according to the to-be-transmitted symbol includes the following: The to-be-transmitted symbol is loaded or modulated onto the reflected signal, or the reflected signal is adjusted according to the to-be-transmitted symbol.

The operation of reflecting a signal in the preceding description may also be an operation of reflecting a signal according to the transmitted data and may be implemented according to a similar process.

This embodiment provides a backscatter communication method. This method determines the target position situation according to the M bits in the to-be-transmitted data. The target position situation includes at least one of a position situation for reflecting no signal or a position situation for reflecting a signal. In the method, the M bits can be carried through the target position situation. Additionally, energy collection for the backscatter communication can be performed at the position for reflecting no signal, and other data bits can be transmitted at the position for reflecting a signal. This method can implement energy collection and improve the communication performance and efficiency of the backscatter communication while does not significantly increase the complexity and implementation difficulty of the device.

In an embodiment, this embodiment provides a backscatter communication method. The backscatter communication method is applied to a first communication node and includes the operations below.

To-be-transmitted data is acquired, and a first-type position is determined according to M bits in the to-be-transmitted data.

In an example, the operation of determining the first-type position according to the M bits in the to-be-transmitted data includes the following: The first-type position is determined from at least 2^{M} position situations according to the M bits; or the index of the position of the first-type position is determined first according to the M bits, and then the first-type position is determined according to the index.

In an example, the backscatter communication method further includes at least one of the following: No signal is reflected at the first-type position, a signal is reflected at the first-type position with the strength of the reflected signal not exceeding a specified threshold, a signal is reflected according to first data at the first-type position, a first impedance state is used at the first-type position, an impedance state is determined according to the first data at the first-type position, a first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In an example, the backscatter communication method further includes determining the second-type position. For example, a position other than the first-type position is taken as the second-type position. Alternatively, the second-type position is determined according to the first-type position. Alternatively, the second-type position is determined from the at least 2^{M} position situations according to the M bits.

In an example, the backscatter communication method further includes at least one of the following: A signal is reflected at the second-type position, a signal is reflected at the second-type position with the strength of the reflected signal exceeding the specified threshold, a signal is reflected according to second data at the second-type position, a second impedance state is used at the second-type position, an impedance state is determined according to the second data at the second-type position, a second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In this embodiment, the first-type position is determined according to the M bits in the to-be-transmitted data. The M bits can be carried through the situation of the first-type position. Moreover, other data bits can be transmitted at the second-type position. Additionally, the first-type position may be used for energy collection for the backscatter communication. Therefore, the method provided in this embodiment can implement energy collection and improve the communication performance and efficiency of the backscatter communication while does not significantly increase the complexity and implementation difficulty of the device.

In an embodiment, this embodiment provides a backscatter communication method. The backscatter communication method is applied to a first communication node and includes the operations below.

To-be-transmitted data is acquired, and a second-type position is determined according to M bits in the to-be-transmitted data.

In an example, the operation of determining the second-type position according to the M bits in the to-be-transmitted data includes the following: The second-type position is determined from at least 2^{M} position situations according to the M bits; or an index of a position of the second-type position is determined first according to the M bits, and then the second-type position is determined according to the index.

In an example, the backscatter communication method further includes at least one of the following: A signal is reflected at the second-type position, a signal is reflected at the second-type position with the strength of the reflected signal exceeding a specified threshold, a signal is reflected according to second data at the second-type position, a second impedance state is used at the second-type position, an impedance state is determined according to the second data at the second-type position, a second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In an example, the backscatter communication method further includes determining the first-type position. For example, a position other than the second-type position is taken as the first-type position. Alternatively, the first-type position is determined according to the second-type position. Alternatively, the first-type position is determined from the at least 2^{M} position situations according to the M bits.

In an example, the backscatter communication method further includes at least one of the following: No signal is reflected at the first-type position, a signal is reflected at the first-type position with the strength of the reflected signal not exceeding the specified threshold, a signal is reflected according to first data at the first-type position, a first impedance state is used at the first-type position, an impedance state is determined according to the first data at the first-type position, a first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In this embodiment, the second-type position is determined according to the M bits in the to-be-transmitted data. The M bits can be carried through the situation of the second-type position. Moreover, other data bits can be transmitted at the second-type position. Additionally, the first-type position may be used for energy collection for the backscatter communication. Therefore, the method provided in this embodiment can implement energy collection and improve the communication performance and efficiency of the backscatter communication while does not significantly increase the complexity and implementation difficulty of the device.

In an embodiment, this embodiment provides a backscatter communication method. The backscatter communication method is applied to a first communication node and includes the operations below.

To-be-transmitted data is acquired, and a first-type position and a second-type position are determined according to M bits in the to-be-transmitted data.

In an example, the operation of determining the first-type position and the second-type position according to the M bits in the to-be-transmitted data includes the following: The first-type position and the second-type position are determined from at least 2^{M} position situations according to the M bits.

In an example, the backscatter communication method further includes at least one of the following: No signal is reflected at the first-type position, a signal is reflected at the first-type position with the strength of the reflected signal not exceeding a specified threshold, a signal is reflected according to first data at the first-type position, a first impedance state is used at the first-type position, an impedance state is determined according to the first data at the first-type position, a first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In an example, the backscatter communication method further includes at least one of the following: A signal is reflected at the second-type position, a signal is reflected at the second-type position with the strength of the reflected signal exceeding the specified threshold, a signal is reflected according to second data at the second-type position, a second impedance state is used at the second-type position, an impedance state is determined according to the second data at the second-type position, a second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In this embodiment, the first-type position and the second-type position are determined according to the M bits in the to-be-transmitted data. The M bits can be carried through the situation of the first-type position and the situation of the second-type position. Additionally, the first-type position may be used for energy collection for the backscatter communication, and other data bits can be transmitted at the second-type position. Therefore, the method provided in this embodiment can implement energy collection and improve the communication performance and efficiency of the backscatter communication while does not significantly increase the complexity and implementation difficulty of the device.

In an embodiment, FIG. 6 is a block diagram of a backscatter communication apparatus according to an embodiment of the present application. This embodiment is applied to a first communication node. As shown in FIG. 6, the backscatter communication apparatus in this embodiment includes a determination module 610 and a communication module 620.

The determination module 610 is configured to determine a target position situation, where the target position situation is used to carry first information. The communication module 620 is configured to perform the backscatter communication according to the target position situation.

In an embodiment, the target position situation includes at least one of the position situation of a first-type position or the position situation of a second-type position. The first-type position includes at least one of the following: a position for reflecting no signal, a position where the strength of a reflected signal does not exceed a specified threshold, a position for reflecting a signal according to first data, a position where a first impedance state is used, a position for determining an impedance state according to the first data, a position where a first circuit state is used, a position for determining a circuit state according to the first data, a position for energy collection, a position for transmitting the first data, or a position for transmitting no data. The second-type position includes at least one of the following: a position for reflecting a signal, a position where the strength of a reflected signal exceeds the specified threshold, a position for reflecting a signal according to second data, a position where a second impedance state is used, a position for determining an impedance state according to the second data, a position where a second circuit state is used, a position for determining a circuit state according to the second data, a position for energy consumption, a position for transmitting the second data, or a position for transmitting data.

In an embodiment, the target position situation derives from N position situations. N is greater than or equal to 2^{M}. M is an integer greater than or equal to 1. The first information includes one of the following: M bits or a symbol obtained according to the M bits. 2^{M} position situations in the N position situations carry different value situations of the M bits respectively. Alternatively, the first information includes first preset information. A position situation other than the 2^{M} position situations in the N position situations is used to indicate the first preset information, or a specified position situation in the N position situations is used to indicate the first preset information.

In an embodiment, the determination module 610 is configured to perform one of the operations below.

The target position situation is determined directly according to the first information, or the target position situation is determined from the N position situations according to the first information.

In an embodiment, the first data includes a symbol 0.

In an embodiment, the second data includes one of the following: data other than the first information in the to-be-transmitted data, the to-be-transmitted data, or second preset information.

In an embodiment, the communication module 620 includes a first determination unit and a first communication unit.

The first determination unit is configured to determine the first-type position. The operation of determining the first-type position includes one of the following: The first-type position is determined according to the target position situation, the first-type position is determined according to the first information, or the first-type position is determined according to the second-type position. The first communication unit is configured to perform at least one of the following operations at the first-type position: No signal is reflected at the first-type position, a signal is reflected at the first-type position with the strength of the reflected signal not exceeding the specified threshold, a signal is reflected according to the first data at the first-type position, the first impedance state is used at the first-type position, an impedance state is determined according to the first data at the first-type position, the first circuit state is used at the first-type position, a circuit state is determined according to the first data at the first-type position, an energy collection state is entered or energy collection is performed at the first-type position, the first data is transmitted at the first-type position, or data is not transmitted at the first-type position.

In an embodiment, the communication module 620 includes a second determination unit and a second communication unit.

The second determination unit is configured to determine the second-type position. The operation of determining the second-type position includes one of the following: The second-type position is determined according to the target position situation, the second-type position is determined according to the first information, or the second-type position is determined according to the first-type position. The second communication unit is configured to perform at least one of the following operations at the second-type position: A signal is reflected at the second-type position, a signal is reflected at the second-type position with the strength of the reflected signal exceeding the specified threshold, a signal is reflected according to the second data at the second-type position, the second impedance state is used at the second-type position, an impedance state is determined according to the second data at the second-type position, the second circuit state is used at the second-type position, a circuit state is determined according to the second data at the second-type position, an energy consumption state is entered or energy consumption is performed at the second-type position, the second data is transmitted at the second-type position, or data is transmitted at the second-type position.

In an embodiment, the communication module 620 is configured to perform the operation below.

The backscatter communication is performed on second information according to the target position situation. The second information includes one of the following: data other than the first information in the to-be-transmitted data, the to-be-transmitted data, or the second preset information.

In an embodiment, the to-be-transmitted data includes at least one of the following: identity information, state information, perception information, indication information, a data message, or payload.

The backscatter communication apparatus provided in this embodiment is configured to perform the backscatter communication method applied to the first communication node in the embodiment shown in FIG. 1 and has similar implementation principles and technical effects, which are not repeated here.

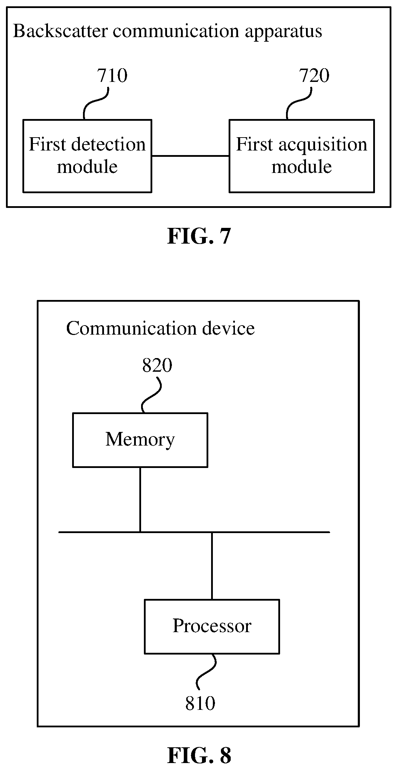

In an embodiment, FIG. 7 is another block diagram of a backscatter communication apparatus according to an embodiment of the present application. This embodiment is applied to a second communication node. As shown in FIG. 7, the backscatter communication apparatus in this embodiment includes a first detection module 710 and a first acquisition module 720.

The first detection module 710 is configured to detect a backscatter signal to determine a target position situation. The first acquisition module 720 is configured to acquire first information according to the target position situation.

In an embodiment, the first detection module 710 includes a detection unit and a determination unit.

The detection unit is configured to detect the backscatter signal to determine at least one of a first-type position or a second-type position. The determination unit is configured to determine the target position situation according to at least one of the first-type position or the second-type position.

In an embodiment, the backscatter communication apparatus applied to the second communication node further includes a second detection module.

The second detection module is configured to detect the backscatter signal to acquire second information.

In an embodiment, the backscatter communication apparatus applied to the second communication node further includes a second acquisition module.

The second acquisition module is configured to acquire, according to at least one of the first information or the second information, at least one of the following: identity information, state information, perception information, indication information, a data message, or payload.

The backscatter communication apparatus provided in this embodiment is configured to perform the backscatter communication method applied to the second communication node in the embodiment shown in FIG. 2 and has similar implementation principles and technical effects, which are not repeated here.

In an embodiment, FIG. 8 is a structural diagram of a communication device according to an embodiment of the present application. As shown in FIG. 8, the device provided in the present application includes a processor 810 and a memory 820. One or more processors 810 may be provided in the device. One processor 810 is shown as an example in FIG. 8. One or more memories 820 may be provided in the device. One memory 820 is shown as an example in FIG. 8. The processor 810 and memory 820 of the device may be connected through a bus or in other manners. The connection through a bus is used as an example in FIG. 8. In this embodiment, the device may be a first communication node or a second communication node.

As a computer-readable storage medium, the memory 820 may be configured to store software programs and computer-executable programs and modules, such as program instructions/modules (for example, the determination module 610 and the communication module 620 in the backscatter communication apparatus applied to the first communication node) corresponding to the device according to any embodiment of the present application. The memory 820 may include a program storage region and a data storage region, where the program storage region may store an operating system and an application program required by at least one function, and the data storage region may store data created depending on the use of the device. Additionally, the memory 820 may include a high-speed random-access memory and may further include a non-volatile memory such as at least one magnetic disk memory, a flash memory, or another non-volatile solid-state memory. In some examples, the memory 820 may include memories remote from the processor 810, and these remote memories may be connected to the device through a network. Examples of the network include, but are not limited to, the Internet, an intranet, a local area network, a mobile communication network, and a combination thereof.

In the case where the communication device is the first communication node, the device may be configured to perform the backscatter communication method applied to the first communication node according to any preceding embodiment and has corresponding functions and effects.

In the case where the communication device is the second communication node, the device may be configured to perform the backscatter communication method applied to the first communication node according to any preceding embodiment and has corresponding functions and effects.

An embodiment of the present application further provides a storage medium containing computer-executable instructions. When executed by a computer processor, the computer-executable instructions are used to perform the backscatter communication method applied to a first communication node. The method includes determining a target position situation, where the target position situation is used to carry first information, and performing the backscatter communication according to the target position situation.

An embodiment of the present application further provides a storage medium containing computer-executable instructions. When executed by a computer processor, the computer-executable instructions are used to perform the backscatter communication method applied to a second communication node. The method includes determining a target position situation, where the target position situation is used to carry first information, and performing the backscatter communication according to the target position situation.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program operations, may represent interconnected logic circuits, modules, and functions, or may represent a combination of program operations and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A backscatter communication method, the method being applied to a first communication node and comprising:
determining a target position situation used to carry first information; and
performing backscatter communication according to the target position situation.

2. The backscatter communication method according to claim 1, wherein the target position situation comprises at least one of:
a position situation of a first-type position, wherein the first-type position comprises at least one of: a position for reflecting no signal, a position where strength of a reflected signal does not exceed a specified threshold, a position for reflecting a signal according to first data, a position where a first impedance state is used, a position for determining an impedance state according to the first data, a position where a first circuit state is used, a position for determining a circuit state according to the first data, a position for energy collection, a position for transmitting the first data, or a position for transmitting no data; or
a position situation of a second-type position, wherein the second-type position comprises at least one of: a position for reflecting a signal, a position where strength of a reflected signal exceeds the specified threshold, a position for reflecting a signal according to second data, a position where a second impedance state is used, a position for determining an impedance state according to the second data, a position where a second circuit state is used, a position for determining a circuit state according to the second data, a position for energy consumption, a position for transmitting the second data, or a position for transmitting data.

3. The backscatter communication method according to claim 1, wherein the target position situation derives from N position situations, wherein N is greater than or equal to 2^{M}, and M is an integer greater than or equal to 1, wherein,
the first information comprises one of M bits or a symbol obtained according to the M bits; and 2^{M} position situations in the N position situations carry different value situations of the M bits respectively; or
the first information comprises first preset information which is indicated by a position situation other than 2^{M} position situations in the N position situations or by a specified position situation in the N position situations.

4. The backscatter communication method according to claim 1, wherein determining the target position situation comprises:
determining the target position situation directly according to the first information; or
determining the target position situation from N position situations according to the first information.

5. The backscatter communication method according to claim 2, wherein the first data comprises a symbol 0.

6. The backscatter communication method according to claim 2, wherein the second data comprises one of: data other than the first information in to-be-transmitted data, to-be-transmitted data, or second preset information.

7. The backscatter communication method according to claim 2, wherein performing the backscatter communication according to the target position situation comprises:
determining the first-type position, wherein determining the first-type position comprises one of:
determining the first-type position according to the target position situation, determining the first-type position according to the first information, or determining the first-type position according to the second-type position; and
performing at least one of the following operations at the first-type position: reflecting no signal at the first-type position, reflecting a signal at the first-type position with strength of the reflected signal not exceeding the specified threshold, reflecting a signal according to the first data at the first-type position, using the first impedance state at the first-type position, determining an impedance state according to the first data at the first-type position, using the first circuit state at the first-type position, determining a circuit state according to the first data at the first-type position, entering an energy collection state or performing energy collection at the first-type position, transmitting the first data at the first-type position, or transmitting no data at the first-type position.

8. The backscatter communication method according to claim 2, wherein performing the backscatter communication according to the target position situation comprises:
determining the second-type position, wherein determining the second-type position comprises one of: determining the second-type position according to the target position situation, determining the second-type position according to the first information, or determining the second-type position according to the first-type position; and
performing at least one of the following operations at the second-type position: reflecting a signal at the second-type position, reflecting a signal at the second-type position with strength of the reflected signal exceeding the specified threshold, reflecting a signal according to the second data at the second-type position, using the second impedance state at the second-type position, determining an impedance state according to the second data at the second-type position, using the second circuit state at the second-type position, determining a circuit state according to the second data at the second-type position, entering an energy consumption state or performing energy consumption at the second-type position, transmitting the second data at the second-type position, or transmitting data at the second-type position.

9. The backscatter communication method according to claim 2, wherein performing the backscatter communication according to the target position situation comprises:
performing the backscatter communication on second information according to the target position situation, wherein the second information comprises one of: data other than the first information in to-be-transmitted data, to-be-transmitted data, or second preset information.

10. The backscatter communication method according to claim 6 or 9, wherein the to-be-transmitted data comprises at least one of: identity information, state information, perception information, indication information, a data message, or payload.

11. A backscatter communication method, the method being applied to a second communication node and comprising:
detecting a backscatter signal to determine a target position situation; and
acquiring first information according to the target position situation.

12. The backscatter communication method according to claim 11, wherein detecting the backscatter signal to determine the target position situation comprises:
detecting the backscatter signal to determine at least one of a first-type position or a second-type position; and
determining the target position situation according to at least one of the first-type position or the second-type position.

13. The backscatter communication method according to claim 11, further comprising:
detecting the backscatter signal to acquire second information.

14. The backscatter communication method according to claim 13, further comprising:
acquiring, according to at least one of the first information or the second information, at least one of: identity information, state information, perception information, indication information, a data message, or payload.

15. A backscatter communication apparatus, the apparatus being applied to a first communication node and comprising:
a determination module configured to determine a target position situation used to carry first information; and
a communication module configured to perform backscatter communication according to the target position situation.

16. A backscatter communication apparatus, the apparatus being applied to a second communication node and comprising:
a first detection module configured to detect a backscatter signal to determine a target position situation; and
a first acquisition module configured to acquire first information according to the target position situation.

17. A backscatter communication device, comprising a memory and at least one processor, wherein
the memory is configured to store at least one program; and
the at least one program, when executed by the at least one processor, causes the at least one processor to perform the backscatter communication method according to any one of claims 1 to 10 or any one of claims 11 to 14.

18. A storage medium for storing a computer program which, when executed by a processor, causes the processor to perform the backscatter communication method according to any one of claims 1 to 10 or any one of claims 11 to 14.
